# EUROPÄISCHE PATENTANMELDUNG

(11) **EP 2 623 743 A1**
(43) Veröffentlichungstag der Anmeldung: **07.08.2013**
(21) Anmeldenummer: 12154049.6
(22) Anmeldetag: 06.02.2012
(51) Int. Cl.: F02C 7/143, F22G 5/12, B01F 5/04

(54) **Wassereinspritzvorrichtung für ein Umleitdampfsystem einer Kraftwerksanlage**

(71) Anmelder: Siemens Aktiengesellschaft, 80333 München (DE)
(72) Erfinder: Deidewig, Frank, 45149 Essen (DE); Deister, Frank, 47877 Willich (DE); Gedanitz, Holger, 44801 Bochum (DE); Huckriede, Dirk, 41352 Korschenbroich (DE); Koebe, Mario, 45478 Mülheim an der Ruhr (DE); Prade, Bernd, 45479 Mülheim (DE); Rauh, Horst Uwe, 45309 Essen (DE); Schestag, Stephan, 46149 Oberhausen (DE)

(57) **Zusammenfassung**

Eine Wassereinspritzvorrichtung (1) für ein Umleitdampfsystem einer Kraftwerksanlage, umfassend einen Strömungskanal (2) für Dampf mit einem Dampfeintritt (8) und einem Dampfaustritt (10), sowie eine zwischen Dampfein- und -austritt (8, 10) angeordnete Einspritzdüse (12) soll eine besonders gute Kühlwirkung zur Vermeidung von Kondensatorschäden mit technisch besonders einfachen Mitteln aufweisen. Dazu ist die Einspritzdüse (12) an einem von einer Innenwand (6) des Strömungskanals (2) beabstandet angeordneten Hohlkörper (14) angeordnet.

## Beschreibung

Die Erfindung betrifft eine Wassereinspritzvorrichtung für ein Umleitdampfsystem einer Kraftwerksanlage, umfassend einen Strömungskanal für Dampf mit einem Dampfeintritt und einem Dampfaustritt, sowie eine zwischen Dampfein- und -austritt angeordnete Einspritzdüse.

Kraftwerksanlagen zur Erzeugung elektrischer Energie nutzen üblicherweise die thermische Energie eines Verbrennungsprozesses zur Erzeugung mechanischer Energie, die dann in einem Generator in elektrische Energie umgewandelt wird. Häufig werden hier direkt befeuerte Dampferzeuger benutzt, die Dampf für eine Dampfturbine erzeugen. Die thermische Energie für die Dampferzeugung kann aber auch aus anderen Quellen wie beispielsweise nuklearer Energie gewonnen werden. Eine andere ohne den Umweg über die Dampferzeugung bietet beispielsweise eine direkte Umsetzung in einer Gasturbine. Auch in diesem Fall werden aber häufig zusätzlich die heißen Abgase der Gasturbine in einem Abhitzekessel zur Dampferzeugung genutzt. Zusammenfassend wird daher in den meisten Kraftwerksanlagen Wasserdampf für die Stromerzeugung genutzt.

Der zum Betrieb der Dampfturbine notwendige Wasserdampf wird in einem Dampfkessel aus zuvor gereinigtem und aufbereitetem Wasser erzeugt. Durch weiteres Erwärmen des Dampfes im Überhitzer nimmt die Temperatur und das spezifische Volumen des Dampfes zu. Vom Dampfkessel aus strömt der Dampf über Rohrleitungen in die Dampfturbine. In der Dampfturbine entspannt der Dampf von hohem zu niedrigem Druckniveau. Innerhalb einer jeden Dampfturbinenstufe wird dabei eine drallbehaftete Strömung durch die Leitbeschaufelung erzeugt. Die jeweils nachfolgenden Laufschaufeln lenken diesen Drall wieder in eine axiale Strömung um und versetzen somit den Turbinenläufer in Rotation.

An die Turbine ist ein Generator angekoppelt, der die mechanische Leistung in elektrische Leistung umwandelt. Danach strömt der entspannte und abgekühlte Dampf in den Kondensator, wo er durch Wärmeübertragung an die Umgebung kondensiert und sich als flüssiges Wasser an der tiefsten Stelle des Kondensators sammelt. Über die Kondensatpumpen und die Vorwärmer wird das Wasser in einen Speisewasserbehälter zwischengespeichert und dann über die Speisepumpe erneut dem Dampfkessel zugeführt.

In bestimmten Betriebszuständen, beispielsweise beim Anfahren der Dampfturbine oder bei einem Dampfturbinenschnellschluss, d. h. Schließen der Dampfturbinenventile im Betrieb, muss der heiße Dampfstrom an der Turbine vorbeigeleitet werden. Da der Kondensator typischerweise nicht für derartig überhitzten Dampf ausgelegt ist, ist dazu ein spezielles Umleitdampfsystem erforderlich, in dem der Frischdampf entspannt und mittels Einspritzen von Wasser abgekühlt wird. Andernfalls könnte der Kondensator beschädigt werden.

Die Wassereinspritzvorrichtung umfasst dabei typischerweise mehrere zwischen ihrem Eintritt und Austritt angeordnete Einspritzdüsen. Diese sind üblicherweise an der Umfassungswand des Dampfkanals der Wassereinspritzvorrichtung angeordnet.

Es ist nunmehr Aufgabe der Erfindung, eine Wassereinspritzvorrichtung für ein Umleitdampfsystem einer Kraftwerksanlage der eingangs genannten Art anzugeben, die eine besonders gute Kühlwirkung zur Vermeidung von Kondensatorschäden mit technisch besonders einfachen Mitteln aufweist.

Diese Aufgabe wird erfindungsgemäß gelöst, indem die Einspritzdüse an einem von einer Innenwand des Strömungskanals beabstandet angeordneten Hohlkörper angeordnet ist.

Die Erfindung geht dabei von der Überlegung aus, dass eine besonders gute Kühlwirkung dadurch erreicht werden könnte, indem eine homogenere Verteilung des Wassers im Dampfstrahl erreicht werden könnte. Eine homogenere Verteilung führt nämlich zu einer vollständigeren Verdampfung des eingespritzten Wassers und damit zu einer gleichmäßigeren Dampftemperatur am Eintritt des Kondensators. Hierbei wurde erkannt, dass bisher übliche Einspritzung an der Innenwand zwischen Dampfein- und Austritt nachteilig ist, da das am Rand eingespritzte Wasser nicht bis in den Kern des Dampfstrahls vordringt, selbst wenn die Innenwand an der Einspritzstelle verengt ist und näher am Kern des Dampfstromes liegt. Die Ursache ist die hohe Geschwindigkeit des Dampfes. Daher sollte die Einspritzdüse an einem von der Innenwand beabstandeten Körper im Strömungskanals angeordnet sein. Dies bedingt eine Position der Einspritzdüse näher am Kern des Dampfstroms, da durch die Zweiteilung des Dampfstroms, bereits ein Teil des Dampfstromes zwischen Wandung und Innenwand hindurchgeführt wird und somit die Düse selbst trotz gleicher Strommenge näher am Kern des Dampfstromes angeordnet ist. Ist der Körper als Hohlkörper ausgestaltet, bietet dies eine einfache Möglichkeit, eine Versorgung mit Einspritzwasser zu gewährleisten.

In vorteilhafter Ausgestaltung ist an dem Hohlkörper eine Mehrzahl von Einspritzdüsen angeordnet. Dadurch wird eine räumlich verteilte Einmischung des Einspritzwassers in den Dampf erreicht, die eine besonders homogene Durchmischung von Einspritzwasser und Dampf ermöglicht. Die Einspritzdüsen können mit dem unter Druck mit Einspritzwasser versorgten Hohlraum verbunden sein, so dass in allen Einspritzdüsen in einfacher technischer Weise eine entsprechende Wasserversorgung mit geeignetem, homogen gleichem Druck vorliegt.

In weiterer vorteilhafter Ausgestaltung umfasst der Hohlkörper dabei eine Mehrzahl von Kammern, wobei die Kammern jeweils einer Untermenge der Einspritzdüsen zugeordnet sind. Vorteilhafterweise umfasst die Wassereinspritzvorrichtung dabei weiterhin eine der jeweiligen Kammer zugeordnete Wasserzufuhrleitung. Die Kammern und die ihnen zugeordneten Einspritzdüsen können dann getrennt regelbar mit Einspritzwasser versorgt werden. Somit kann die Zerstäubungs- und Mischungsqualität aktiv über Ventile an die unterschiedlichen Bedingungen bei Teillast gegenüber Volllast angepasst werden.

Vorteilhafterweise ist dabei die jeweilige Wasserzufuhrleitung in einer den Hohlkörper mit der Innenwand verbindenden Stütze angeordnet. Die Stützen werden dadurch doppelt genutzt: Einerseits sorgen sie für eine zuverlässige Befestigung des Hohlkörpers an der Innenwand, andererseits dienen sie der Versorgung der Kammer oder der Kammern mit Einspritzwasser. Die Stützen sind dabei vorteilhaft schräg angestellt, um eine Versteifung der Konstruktion zu erreichen. Weiterhin können die Stützen turbulenzerzeugende Strukturen aufweisen wie z. B. Mischelemente, um die Durchmischung von Einspritzwasser und Dampf zu verbessern.

Der Hohlkörper sollte aerodynamisch stromlinienförmig ausgestaltet sein, um die erforderlichen Haltekräfte und strömungsinduzierte Schwingungen an der Stützstruktur zu vermindern. Dazu weist der Hohlkörper vorteilhafterweise einen Strömungswiderstandskoeffizient von kleiner als 0,2 auf. Dies ist beispielsweise durch eine Ausgestaltung in Tropfenform oder einer anderen entsprechend stromlinienförmigen Form erreichbar.

Vorteilhafterweise ist die jeweilige Einspritzdüse als Druckzerstäuberdüse, insbesondere mit einem Durchmesser von 0,5 mm bis 1,5 mm, oder als Druckdrallzerstäuberdüse, insbesondere mit einem Durchmesser von 1,5 mm bis 2,0 mm, ausgestaltet. Derartige Düsen bieten eine wesentlich bessere Durchmischung von Dampf und Einspritzwasser als bisherige Düsen, bei denen Wasser lediglich über vergleichsweise große Wandbohrungen schräg in die Dampfströmung eingespritzt wurde. Bei den bisher eingesetzten Düsen kam es daher praktisch zu keiner nennenswerten Eindringung des Kühlwassers in die Hauptströmung und keiner Primärzerstäubung, sondern weitgehend nur Sekundärzerstäubung durch Scherung mit der Hauptdampfströmung und/oder der Grenzschicht. Durch Druck- oder Druckdrallzerstäuberdüsen kommt es jedoch zu einem nennenswerten radialen oder lateralen Austausch. Andere Düsen wie z. B. mit Hilfszerstäubermedium (Wasserdampf), Ultraschall, etc. sind möglich, aber evtl. apparativ aufwändiger.

In weiterer vorteilhafter Ausgestaltung ist an dem Hohlkörper ein statisches Mischelement angeordnet. Dieses kann am stromabwärtigen Ende oder auch in Strömungsrichtung des Dampfes vor dem Hohlkörper angebracht sein. Ein Mischelement erhöht die Turbulenzen in der Strömung und sorgt damit für eine verbesserte Vermischung von Einspritzwasser und Dampf. Die Mischelemente können auch als Parmix-Elemente ausgebildet sein.

In besonders vorteilhafter Ausgestaltung ist das statische Mischelement auf der dem Dampfeintritt zugewandten Seite des Hohlkörpers angeordnet. Dadurch sind die Mischelemente vor Tropfenerosion geschützt, da sie dem Einspritzwasser nicht ausgesetzt sind.

Vorteilhafterweise weist der Strömungskanal der Wassereinspritzvorrichtung eine Reduzierung auf. Unter Reduzierung wird hier eine Drossel in der Art eines beispielsweise konisch ausgebildeten, sich im Querschnitt in Dampfströmungsrichtung reduzierenden Abschnittes verstanden. Der Hohlkörper kann dabei in Strömungsrichtung vor oder hinter der Reduzierung angeordnet sein. Vorteil einer bezüglich der Drosselung stromaufseitigen Einspritzung sind die geringen Geschwindigkeiten bei gleichem Rohrquerschnitt und damit verbunden eine größere Verweilzeit, die zur Verdampfung der eingespritzten Wassertropfen zur Verfügung steht. Die Einspritzung von Wasser stromabseitig der Drosselstelle hat den Vorteil, dass nach der Drosselung der Dampf in einem stärker überhitzten Zustand vorliegt, was eine leichtere Verdampfung bis zu einer geringeren Zieltemperatur ermöglicht.

Zur Kombination beider Varianten ist es daher von besonderem Vorteil, zwei Einspritzstufen vor und hinter der Drosselstelle vorzusehen, d. h. vorteilhafterweise ist ein Hohlkörper in Dampfströmungsrichtung vor der Reduzierung angeordnet ist und ein weiterer, von einer Innenwand des Strömungskanals beabstandet angeordneter Hohlkörper mit einer Einspritzdüse in Dampfströmungsrichtung hinter der Reduzierung angeordnet.

Ein Umleitdampfsystem für eine Kraftwerksanlage umfasst vorteilhafterweise eine derartige Wassereinspritzvorrichtung und eine Kraftwerksanlage vorteilhafterweise ein derartiges Umleitdampfsystem.

Die mit der Erfindung erzielten Vorteile bestehen insbesondere darin, dass durch die gleichmäßige, räumlich verteilte Einspritzung aus einem im Strömungskanal angeordneten Hohlkörper über mehrere Einspritzdüsen die Durchmischung und Zerstäubung des eingespritzten Wassers erheblich verbessert und damit eine besonders gute Kühlwirkung im Umleitdampfsystems erreicht wird. Gleichzeitig wird eine homogene Temperaturverteilung ohne einzelne besonders heiße Dampfströme erreicht und Erosionsprobleme z. B. durch Tropfenschlagerosion vermieden.

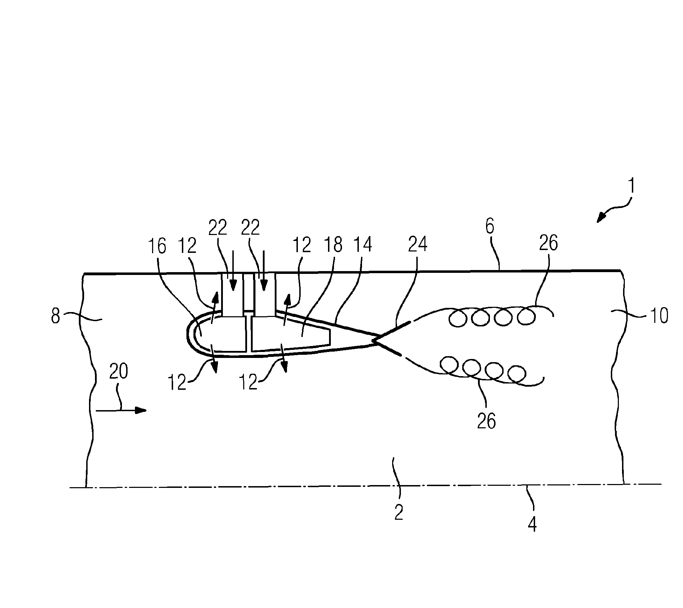

Die Erfindung wird anhand einer Zeichnung näher erläutert. Darin zeigt die Figur eine Wassereinspritzvorrichtung mit an einem von der Innenwand beabstandet angeordneten Hohlkörper angeordneten Einspritzdüsen.

Die Wassereinspritzvorrichtung 1 gemäß der FIG umfasst einen Strömungskanal 2, der von einer um eine Achse 4 radialsymmetrisch angeordneten Innenwand 6 eingefasst ist. Der Dampfeintritt 8 befindet sich links außerhalb der FIG, der Dampfaustritt 10 rechts.

Die Wassereinspritzvorrichtung 1 ist Bestandteil eines Umleitdampfsystems einer Kraftwerksanlage, die nicht näher dargestellt ist. Nicht gezeigt ist ein den Dampfeintritt 8 vorgeschaltetes Umleitventil, mit dem Dampfstrom aus dem Dampferzeuger der Kraftwerksanlage an der Dampfturbine vorbei durch das Umleitdampfsystem direkt in den dem Dampfaustritt 10 nachgeschalteten Kondensator geleitet wird. Dies kann in bestimmten Betriebszuständen, z. B. beim Anfahren der Dampfturbine oder nach einem Trip notwendig sein.

In der Wassereinspritzvorrichtung 1 wird der Dampf gekühlt, um ohne Beschädigung des Kondensators in diesen eingeleitet werden zu können. Dazu sind in der Wassereinspritzvorrichtung 1 im Strömungskanal 2 Einspritzdüsen 12 angeordnet, die Wasser in den Dampfstrom einspritzen.

Um eine besonders gute Vermischung mit dem Dampf und damit eine vollständige Verdampfung des eingespritzten Wassers zu erreichen, sind die Einspritzdüsen 12 räumlich verteilt an einem Hohlkörper 14 angeordnet, der von der Innenwand 6 beabstandet im Strömungskanal angeordnet ist. In der Schnittzeichnung nach der FIG sind jeweils zwei Einspritzdüsen 12 auf der Ober- und Unterseite des Hohlkörpers 14 dargestellt, es sind jedoch um den Hohlkörper 14 herum weitere Einspritzdüsen 12 angeordnet.

Der Hohlkörper 14 weist eine vordere Kammer 16 und eine hintere Kammer 18 auf, wobei sich die Bezeichnung auf die Dampfströmungsrichtung 20 bezieht. Die Kammern 16, 18 sind jeweils durch eine Wasserzufuhrleitung in einer Stütze 22 mit Wasser beaufschlagt. Die Stützen 22 verbinden den Hohlkörper 14 mit der Innenwand 6 und fixieren ihn im Strömungskanal 2. Jede der Kammern 16, 18 ist jeweils mit einem Teil der Einspritzdüsen 12 verbunden, so dass die Einspritzdüsen gruppenweise durch entsprechende Steuerung der Wasserzufuhr zu den Kammern 16, 18 hinsichtlich Einspritzdruck und -menge getrennt regelbar sind.

Der Hohlkörper ist in einer Tropfenform stromlinienförmig ausgebildet. Die Einspritzdüsen 12 sind als Druckzerstäuberdüsen mit einem Durchmesser von 1 mm ausgebildet, können aber in einer alternativen Ausführungsform auch als Druckdrallzerstäuberdüsen mit einem Durchmesser von 1,5 mm ausgebildet sein.

Dampfabseitig ist in der FIG am Hohlkörper 14 ein statisches Mischelement 24 angeordnet, welches Verwirbelungen 26 verursacht, die die Dampf-Wasser-Vermischung verbessern. Alternativ kann in einer nicht gezeigten Ausführungsform das Mischelement 24 dampfaufseitig angeordnet sein.

Nicht gezeigt in der FIG sind weitere Hohlkörper 14 in der FIG, die gruppenweise angeordnet sind. Ein Teil davon ist in Dampfströmungsrichtung 20 vor einer Reduzierung des Strömungskanals 2, d. h. vor einem sich verjüngenden Abschnitt angeordnet, ein anderer Teil dahinter.

## Patentansprüche

1. Wassereinspritzvorrichtung (1) für ein Umleitdampfsystem einer Kraftwerksanlage, umfassend einen Strömungskanal (2) für Dampf mit einem Dampfeintritt (8) und einem Dampfaustritt (10), sowie eine zwischen Dampfein- und -austritt (8, 10) angeordnete Einspritzdüse (12),
wobei die Einspritzdüse (12) an einem von einer Innenwand (6) des Strömungskanals (2) beabstandet angeordneten Hohlkörper (14) angeordnet ist.

2. Wassereinspritzvorrichtung (1) nach Anspruch 1,
bei der an dem Hohlkörper (14) eine Mehrzahl von Einspritzdüsen (12) angeordnet ist.

3. Wassereinspritzvorrichtung (1) nach Anspruch 2,
bei der der Hohlkörper (14) eine Mehrzahl von Kammern (16, 18) umfasst,
wobei die Kammern (16, 18) jeweils einer Untermenge der Einspritzdüsen (12) zugeordnet sind.

4. Wassereinspritzvorrichtung (1) nach Anspruch 3,
die für jede Kammer (16, 18) eine der jeweiligen Kammer (16, 18) zugeordnete Wasserzufuhrleitung umfasst.

5. Wassereinspritzvorrichtung (1) nach Anspruch 4,
bei der die jeweilige Wasserzufuhrleitung in einer den Hohlkörper (14) mit der Innenwand (6) verbindenden Stütze (22) angeordnet ist.

6. Wassereinspritzvorrichtung (1) nach einem der vorhergehenden Ansprüche,
bei der der Hohlkörper (14) einen Strömungswiderstandskoeffizient von kleiner als 0,2 aufweist.

7. Wassereinspritzvorrichtung (1) nach einem der vorhergehenden Ansprüche,
bei dem die jeweilige Einspritzdüse (12) als Druckzerstäuberdüse, insbesondere mit einem Durchmesser von 0,5 mm bis 1,5 mm, oder als Druckdrallzerstäuberdüse,
insbesondere mit einem Durchmesser von 1,5 mm bis 2,0 mm, ausgestaltet ist.

8. Wassereinspritzvorrichtung (1) nach einem der vorhergehenden Ansprüche,
bei der an dem Hohlkörper (14) ein statisches Mischelement (24) angeordnet ist.

9. Wassereinspritzvorrichtung (1) nach Anspruch 8,
bei der das statische Mischelement (24) auf der dem Dampfeintritt (8) zugewandten Seite des Hohlkörpers (14) angeordnet ist.

10. Wassereinspritzvorrichtung (1) nach einem der vorhergehenden Ansprüche,
deren Strömungskanal (2) eine Reduzierung aufweist.

11. Wassereinspritzvorrichtung (1) nach Anspruch 10,
bei der der Hohlkörper (14) in Dampfströmungsrichtung vor der Reduzierung angeordnet ist und ein weiterer, von einer Innenwand (6) des Strömungskanals (2) beabstandet angeordneter Hohlkörper (14) mit einer Einspritzdüse (12) in Dampfströmungsrichtung hinter der Reduzierung angeordnet ist.

12. Umleitdampfsystem für eine Kraftwerksanlage mit einer Wassereinspritzvorrichtung (1) nach einem der vorhergehenden Ansprüche.

13. Kraftwerksanlage mit einem Umleitdampfsystem nach Anspruch 9.
